# EUROPÄISCHE PATENTSCHRIFT

(11) **EP 2 717 233 B1**
(45) Veröffentlichungstag und Bekanntmachung des Hinweises auf die Patenterteilung: **21.06.2017**
(21) Anmeldenummer: 13174082.1
(22) Anmeldetag: 27.06.2013
(51) Int. Cl.: G07C 9/00, E06B 7/32

(54) **Vorrichtung zur Identifizierung einer Katze zum Zwecke der Ansteuerung einer elektronischen Katzenklappe**
Device for identifying a cat for the purpose of controlling an electronic cat flap
Dispositif d'identification d'un chat à des fins de commande d'une chatière électronique

(30) Priorität: 04.10.2012 DE 202012009510 U
(43) Veröffentlichungstag der Anmeldung: 09.04.2014
(73) Patentinhaber: Flache, Antra, 20148 Hamburg (DE)
(72) Erfinder: Flache, Stefan, 20148 Hamburg (DE)
(74) Vertreter: Hauck Patentanwaltspartnerschaft mbB

(56) Entgegenhaltungen:
- EP-A2- 0 744 843
- WO-A1-2010/023431
- WO-A1-2010/060623
- DE-U1- 20 007 907
- US-A1- 2003 216 124
- US-A1- 2004 100 386
- US-A1- 2011 148 573

## Beschreibung

Die Erfindung betrifft eine Vorrichtung zur Identifizierung einer Katze zum Zwecke der Ansteuerung einer elektronischen Katzenklappe. Zu der Vorrichtung gehört eine Katzenklappe, die ein Basisgerät mit einer Funk-Schnittstelle und einer Verriegelungseinheit zur elektromechanischen Verriegelung der Katzenklappe aufweist, sowie ein Halsband für eine Katze, an dem ein Funk-Transmitter angeordnet ist.

Einfache, mechanische Katzenklappen ermöglichen einer Katze, das Haus selbstständig zu betreten und zu verlassen, ohne dass der Besitzer der Katze hierfür eine Tür öffnen und schließen muss. Derartige Katzenklappen lassen sich allenfalls manuell verriegeln, sodass bei nicht verriegelter Klappe nicht nur die eigene Katze, sondern auch fremde Katzen oder andere Tiere die Klappe passieren können.

Ebenfalls bekannt sind elektronische Katzenklappen, die den Zugang elektromechanisch verriegeln und eine Passage erst freigeben, wenn die Katze mehr oder minder eindeutig identifiziert worden ist, etwa über einen am Halsband befestigten Magneten oder einen implantierten oder an einem Halsband befestigten RFID-Transponder.

Die RFID-Variante ist unter den elektronischen Katzenklappen derzeit am weitesten verbreitet, weil die RFID-Transponder preisgünstig sind und keine eigene Energiequelle benötigen. Allerdings ist die Reichweite der auf diese Weise herstellbaren Funkverbindung von nur wenigen Zentimeter sehr gering. Versucht die Katze, die Klappe zu öffnen, solange sich der RFID-Transponder noch in einem größeren Abstand von der Antenne befindet, bleibt die Klappe verriegelt. Dies geschieht zum Beispiel bei Katzen, die zunächst mit dem lang ausgestreckten Vorderverlauf versuchen, die Klappe zu öffnen. Die Katze bleibt daher unter Umständen ausgesperrt und verliert im schlimmsten Fall das Vertrauen in das eigene Zuhause und entfernt sich dauerhaft.

Aus der Druckschrift US 2011/0244798 A1 ist ein Datenpaket-Generator bekannt geworden, der über Funksignale Datenpakete an eine Computervorrichtung oder ein Netzwerk übermittelt. Die Datenpakete können beispielsweise zum Freischalten einer verschlossenen Tür genutzt werden. Auch eine Anwendung im Haustierbereich ist angesprochen, wobei hierfür ein RFID-Tag verwendet wird.

Aus der Druckschrift WO 2009/090426 A2 ist eine RFID-Haustiertür bekannt geworden. Das Haustier wird mit einem codierten RFID-Tag versehen. Eine Vorrichtung an der Haustiertür liest den Code aus und öffnet die Tür bei Übereinstimmung mit einem gespeicherten ID-Code. Bei dieser bekannten elektronischen Katzenklappe wird das RFID-Lesegerät immer erst dann aktiviert, wenn das Haustier eine Lichtschranke an der Haustiertür auslöst und sich bereits sehr nahe an der Haustiertür befindet.

Die Druckschrift DE 200 07 907 U1 beschreibt ein automatischen Tor zum Durchlassen eines Tieres. Dabei öffnet eine Betätigungseinrichtung automatisch eine Schiebetür, wenn mit Hilfe einer Erfassungseinrichtung die Anwesenheit einer Katze in einem definierten Bereich um die Schiebetür herum erfasst wird. Hierzu empfängt die Erfassungseinrichtung ein von einem an einem Halsband der Katze angebrachten Transponder ausgesendetes, kodiertes Signal, um die Katze zu identifizieren.

Aus der Druckschrift WO 2010/023431 A1 ist eine elektronische Katzenklappe mit zwei Sensoreinrichtungen bekannt geworden. Die erste Sensoreinrichtung erfasst ein Öffnen der Klappe mit Hilfe eines Neigungssensors. Die zweite Sensoreinrichtung kann zur Identifizierung einer Katze das Signal eines an der Katze angebrachten Funksenders auslesen. Stellt die erste Sensoreinrichtung fest, dass die Klappe geöffnet wurde, ohne dass die zweite Sensoreinheit die Anwesenheit einer zugangsberechtigten Katze feststellt, wird ein Alarm ausgelöst.

Die Druckschrift WO 2010/060623 A1 beschreibt ein Zugangskontrollsystem mit einer Zugangsbarriere, einer Verriegelungseinheit, einer stationären Sende-/Empfangseinheit und einer mobilen Sende-/Empfangseinheit. Die mobile Sende- und Empfangseinheit wird erst nach der Detektion von Vibrationen von einem passiven in einen aktiven Zustand geschaltet, in dem sie als Antwort auf ein von der stationären Sende- und Empfangseinheit ausgesendetes Lokalisationssignal ein Identifikationssignal zurücksendet. Außerdem gibt es einen Kraftsensor, der in die Verriegelungseinheit integriert ist und die bei einem Versuch, die verriegelte Tür zu öffnen, auftretenden Kräfte erfasst und ein Zutrittssignal an eine Steuereinheit der stationären Einheit sendet.

Aus der Druckschrift US 2004/0100386A1 ist eine Vorrichtung mit den Merkmalen des Oberbegriffs des Anspruchs 1 bekannt geworden.

Davon ausgehend ist es die Aufgabe der Erfindung, eine Vorrichtung zur Identifizierung einer Katze zum Zwecke der Ansteuerung einer elektronischen Katzenklappe zur Verfügung zu stellen, die eine berechtigte Katze zuverlässig passieren lässt, für andere Tiere jedoch verschlossen bleibt.

Diese Aufgabe wird gelöst durch die Vorrichtung mit den Merkmalen des Anspruchs 1. Vorteilhafte Ausgestaltungen sind in den sich anschließenden Unteransprüchen angegeben.

Die Vorrichtung dient zur Identifizierung einer Katze zum Zwecke der Ansteuerung einer elektronischen Katzenklappe. Sie weist folgendes auf:
- eine Katzenklappe, die ein Basisgerät mit einer Funk-Schnittstelle und einer Verriegelungseinheit zur elektromechanischen Verriegelung der Katzenklappe aufweist, und
- ein Halsband für eine Katze, an dem ein Funk-Transmitter angeordnet ist, wobei
- die Funk-Schnittstelle und der Funk-Transmitter eine bidirektionale, aktive Funktechnologie einsetzen und
- das Basisgerät und/oder das Halsband dazu ausgebildet ist, eine Abstandsbestimmung zwischen Katze und Katzenklappe vorzunehmen, wobei eine Empfangs-Feldstärke gemessen und mit einem zuvor hinterlegten Referenzwert verglichen wird, sodass nur Signale von Katzen akzeptiert werden, die sich in einem definierten Bereich um die Katzenklappe herum aufhalten.

Die Erfindung beruht auf der Erkenntnis, dass die eingangs geschilderten Schwierigkeiten mit der RFID-Technologie nicht durch eine bloße Vergrößerung der Reichweite allein gelöst werden können. Wird eine Funktechnologie mit größerer Reichweite eingesetzt, kann zwar eine berechtigte Katze bei Annäherung an die Katzenklappe schon früher identifiziert werden, sodass die Verriegelung auch bei besonders vorsichtigen oder schreckhaften Katzen rechtzeitig geöffnet werden kann. Jedoch befindet sich die Katzenklappe dann solange in einer nicht verriegelten Stellung, wie sich die berechtigte Katze innerhalb der Reichweite der Funktechnologie befindet. Dadurch können auch nicht berechtigte Tiere Zutritt erhalten, beispielsweise wenn sich die berechtigte Katze innerhalb der Reichweite in einem Nebenraum, beispielsweise schlafend auf einem Sofa, befindet.

Bei der Erfindung wird daher nicht nur eine aktive Funktechnologie eingesetzt, die eine Kommunikation in beiden Richtungen zwischen Basisgerät und Halsband ermöglicht und eine für eine rechtzeitige Identifizierung einer herannahenden Katze ausreichende Reichweite im Bereich von beispielsweise 10 cm bis 5 m, bevorzugt im Bereich von 1 m bis 3 m, aufweist, sondern es wird zugleich ein Abstand zwischen Katze und Katzenklappe bestimmt, indem eine Empfangs-Feldstärke gemessen und mit einem zuvor hinterlegten Referenzwert verglichen wird.

Hierzu kann beispielsweise in einem Anlernmodus das Halsband in einem vorgegebenen Abstand von der Katzenklappe angeordnet und eine Funkverbindung hergestellt werden. Dabei kann die Empfangsfeldstärke an der Funk-Schnittstelle und/oder am Funk-Transmitter gemessen und als Referenzwert gespeichert werden. Wird dann im Normalbetrieb eine größere Empfangsfeldstärke gemessen, befindet sich die Katze näher an der Katzenklappe als bei dem Anlernvorgang. In diesem Fall befindet sich die Katze also in einem definierten Bereich um die Katzenklappe herum und das zugehörige Signal wird akzeptiert. Hiermit ist gemeint, dass das Basisgerät die Verriegelungseinheit ansteuert und in eine nicht-verriegelte Stellung bringt. Dann kann die Katzenklappe von der Katze geöffnet werden kann. Es wird also zunächst festgestellt, ob sich eine berechtigte Katze in dem definierten Bereich aufhält.

Befindet sich die berechtigte Katze hingegen in einem größeren Abstand, also außerhalb des definierten Bereichs um die Katzenklappe herum, wird die gemessene Empfangsfeldstärke geringer sein als der zuvor hinterlegte Referenzwert. In diesem Fall wird das von dieser Katze stammende Signal nicht akzeptiert, womit gemeint ist, dass die Verriegelungseinheit in einer verriegelten Stellung verbleibt.

Der beschriebene Anlernmodus stellt eine Kalibrierung für die Abstandsmessung dar, welche in Anbetracht von Fertigungstoleranzen und entsprechend unterschiedlichen Messergebnissen sowie Empfangsbedingungen erforderlich sein kann. Das Hinterlegen des Referenzwerts im Rahmen dieses Kalibrierungsvorgangs kann bevorzugt gleichzeitig mit der Anmeldung des Halsbands an der Basisstation erfolgen, also gemeinsam mit der Bekanntgabe eines eindeutigen Identifiers oder Codes des Halsbands an der Basisstation. Unabhängig von der Kalibrierung kann die Kommunikation zwischen Funk-Schnittstelle und Funk-Transmitter wahlweise verschlüsselt erfolgen. Hierzu kann zwischen den beiden Kommunikationspartnern eine Information über ein zu verwendendes Verschlüsselungsverfahren und/oder ein Passwort oder Schlüssel ausgetauscht werden. Dieser Austausch kann insbesondere gemeinsam mit der Übertragung des eindeutigen Identifiers oder Codes erfolgen. Eine Verschlüsselung schützt nicht nur vor Manipulation, sondern reduziert zugleich die Wahrscheinlichkeit zufälliger, falsch-positiver Erkennungen.

Die Katzenklappe kann zum Einbau in eine Haustür, ein Fenster oder eine Wand vorbereitet sein und kann hierzu einen Rahmen und eine beweglich in dem Rahmen angeordnete Tür oder Klappe aufweisen. Die Verriegelungseinheit kann die Stellung der Klappe oder Tür relativ zu dem Rahmen verriegeln. Das Basisgerät kann in den Rahmen der Katzenklappe integriert und/oder daran befestigt sein. Das Basisgerät ist mit der Verriegelungseinheit verbunden und kann diese zum Öffnen und Schließen der Klappe ansteuern. Über die Funk-Schnittstelle des Basisgeräts kann eine Funkverbindung zu dem Funk-Transmitter des Halsbands hergestellt werden.

Ebenfalls möglich ist eine Nachrüstung einer herkömmlichen Katzenklappe mit einem Basisgerät und einer Verriegelungseinheit. In diesem Fall kann eine bereits in ein Haus eingebaute Katzenklappe weiterverwendet werden. Basisgerät, Verriegelungseinheit und Halsband bzw. daran zu befestigender Funk-Transmitter können als Nachrüstsatz angeboten werden. Um die Montage insbesondere der Verriegelungseinheit an der bestehenden Katzenklappe zu erleichtern, kann ein spezieller Montagehelfer verwendet werden, mit dem die Verriegelungseinheit exakt auf die Klappe bzw. ein daran angeordnetes Verriegelungselement, insbesondere eine Verriegelungsöffnung, ausgerichtet und am Rahmen befestigt werden kann, beispielsweise durch Verkleben.

Funk-Schnittstelle und Funk-Transmitter setzen eine bidirektionale, aktive Funktechnologie ein. Damit ist gemeint, dass beide über eine Energiequelle verfügen und nicht nur zum Empfang von Funksignalen und zu deren Modulation eingerichtet sind, wie es bei RFID-Tags der Fall ist, sondern aktiv Funksignale aussenden können.

Die Funk-Schnittstelle und der Funk-Transmitter können auch als erste und zweite Funkeinheit bezeichnet werden. Beide können eine Sende- und Empfangseinrichtung aufweisen, insbesondere einen Transceiver-Chip und eine damit verbundene Antenne. Grundsätzlich kann der Funk-Transmitter bzw. die zweite Funkeinheit nicht nur an einem Halsband, sondern auch auf sonstige Weise an der Katze angeordnet werden. Auch eine Implantation im Nacken der Katze ist möglich.

In einer Ausgestaltung ist der Funk-Transmitter dazu ausgebildet, ein von der Funk-Schnittstelle ausgesendetes Funk-Telegramm zu empfangen und per Funk ein Antwort-Telegramm mit einem Messwert für die Empfangs-Feldstärke an das Basisgerät zu übermitteln. In diesem Fall kann der übermittelte Messwert für die Empfangs-Feldstärke im Basisgerät mit dem dort hinterlegten Referenzwert verglichen werden. Wurde das von der Funk-Schnittstelle des Basisgeräts ausgesendete Funksignal mit einer höheren Feldstärke empfangen als der hinterlegte Referenzwert, erkennt das Basisgerät, dass sich die Katze in dem definierten Bereich um die Katzenklappe herum befindet und öffnet die Verriegelung. Alternativ kann der Referenzwert auf Seiten des Halsbandes hinterlegt werden. In diesem Fall kann der Funk-Transmitter die Feldstärke des vom Basisgerät ausgesendeten Funksignals messen und mit dem hinterlegten Referenzwert vergleichen. Erst wenn sich die Katze innerhalb des definierten Bereichs um die Katzenklappe herum befindet, kann der Funk-Transmitter das von der Funk-Schnittstelle ausgesendete Funk-Telegramm beantworten.

In einer Ausgestaltung ist der Funk-Transmitter dazu ausgebildet, in dem Antwort-Telegramm den Messwert zusammen mit einem eindeutigen Identifier zu übermitteln. Der eindeutige Identifier bezieht sich auf das Halsband und kann im Basisgerät hinterlegt sein. Das Basisgerät kann dann das Antwort-Telegramm auswerten und auf Grundlage der übermittelten Daten feststellen, ob es sich um eine berechtigte Katze handelt und ob sich diese bereits innerhalb des definierten Bereichs befindet.

In einer Ausgestaltung weist die aktive Funktechnologie eine Reichweite von mindestens einigen Metern auf. Insbesondere kann die Reichweite mindestens 2 m, mindestens 3 m oder mindestens 5 m betragen. Dadurch kann der Identifizierungsvorgang rechtzeitig ausgelöst werden, sodass die Klappe bereits entriegelt sein kann, wenn die Katze die Klappe erreicht, selbst wenn sie schnell darauf zuläuft.

In einer Ausgestaltung weist das Basisgerät und/oder das Halsband einen RF-Anteil auf, der Baugruppen zum Empfangen und Senden von Daten enthält und über eine Antenne verfügt. Der RF-Anteil kann insbesondere ein Transceiver-Chip sein, in dem die genannten Baugruppen mit Ausnahme der Antenne zusammengefasst sind.

In einer Ausgestaltung weist das Basisgerät und/oder das Halsband einen Prozessor auf, der dazu ausgebildet ist, den RF-Anteil zu steuern.

In einer Ausgestaltung ist der Prozessor des Halsbands dazu ausgebildet, in einen Zustand mit minimalem Energieverbrauch versetzt zu werden, wenn keine aktive Kommunikation mit dem Basisgerät erfolgt. Auf diese Weise kann das Halsband besonders energiesparend betrieben werden, was für eine lange Lebensdauer einer Batterie wünschenswert ist.

In einer Ausgestaltung ist der RF-Anteil in einen Schlafmodus versetzbar, in dem der Funk-Transmitter deaktiviert und ein Funk-Receiver nur periodisch mit einer Periodendauer für kurze Zeitspannen aktiviert ist. Es können also nicht nur der Prozessor, sondern auch der RF-Anteil in einen besonders energiesparenden Betrieb versetzt werden. Gleichzeitig wird ein Funk-Receiver, also ein für den Empfang eines von dem Basisgerät ausgesendeten Funksignals zuständiges Bauteil, regelmäßig aktiviert, sodass eine Funkverbindung in kurzen Zeitabständen aufgebaut werden kann.

In einer Ausgestaltung ist das Basisgerät dazu ausgebildet, periodisch für einen Zeitraum "Magic Packets" zu senden, wobei der Zeitraum länger ist als die Periodendauer und wobei der Funk-Receiver dazu ausgebildet ist, den Prozessor des Halsbands bei Empfang eines Magic Packets zu aktivieren. Bei einem Magic Packet handelt es sich um eine definierte Signalfolge, mit welcher das Halsband aus dem Schlafmodus "aufgeweckt" werden kann. Der Zeitraum, in dem das Basisgerät Magic Packets sendet, ist länger als die Periodendauer, sodass der Receiver stets während des Aussendens eines der Magic Packets empfangsbereit ist. Dadurch ist es möglich, innerhalb einer Periodendauer eine Funkverbindung aufzubauen.

In einer Ausgestaltung ist der RF-Anteil dazu ausgebildet, einen Messwert für die Empfangs-Feldstärke zur Verfügung zu stellen. Insbesondere kann die Messung der Empfangs-Feldstärke von dem RF-Anteil ausgeführt werden. Der zur Verfügung gestellte Messwert kann dann insbesondere von dem Prozessor ausgewertet und ggf. mit einem hinterlegten Referenzwert verglichen werden.

In einer Ausgestaltung sendet der RF-Anteil nur dann ein Antworttelegramm auf ein empfangenes Signal, wenn der Messwert für die Empfangs-Feldstärke des Signals den Referenzwert erreicht oder überschreitet. Diese Vorgehensweise ist besonders energiesparend, weil die Sendedauer des RF-Anteils eingeschränkt wird. Es sind mehrere Ausgestaltungen möglich: Der Vergleich der Empfangs-Feldstärke mit dem Referenzwert kann von einem mit dem RF-Anteil verbundenen Prozessor durchgeführt werden. In diesem Fall steuert der Prozessor den RF-Anteil so an, dass bei Unterschreiten des Referenzwerts kein Antworttelegramm versendet wird. Bevorzugt können der RF-Anteil und der Prozessor sofort wieder in einen Energiesparmodus (sleep mode) versetzt werden. Der Vergleich kann auch vom RF-Anteil selbst vorgenommen werden. In diesem Fall kann der Prozessor bei Empfang eines Signals geringer Feldstärke im Energiesparmodus verbleiben, also gar nicht erst aktiviert werden. Unabhängig davon, wo der Vergleich durchgeführt wird, kann jeglicher energieverbrauchender Vorgang sofort gestoppt werden, falls die empfangene Feldstärke den Referenzwert unterschreitet. Beispielsweise kann das Aussenden eines Antworttelegramms oder eine weitergehende Auswertung eines empfangenen Signals unterbleiben oder vorzeitig abgebrochen werden.

In einer Ausgestaltung weist das Halsband eine Vorrichtung zur Gewinnung von elektrischer Energie aus einer Bewegung der Katze auf. Hierzu kann ein Massestück beweglich am Halsband gelagert sein, ähnlich wie bei einer Armbanduhr mit einem automatischen Aufzugsmechanismus. Die Bewegung des Massestücks kann dann unter Ausnutzung des piezoelektrischen Effektes oder durch elektromagnetische Induktion in elektrische Energie umgewandelt werden. Auch wenn die auf diese Weise zu gewinnenden Energiemengen gering sind, können sie zur Versorgung des Halsbands ausreichend sein oder jedenfalls einen wichtigen Beitrag dazu leisten und auf diese Weise die Lebensdauer einer Batterie erhöhen.

In einer Ausgestaltung weist das Halsband einen Programmspeicher auf und ist dazu ausgebildet, den Programmspeicher zu überschreiben und eine neue Firmware zu installieren, die in Paketen per Funk von dem Basisgerät übermittelt wird.

In einer Ausgestaltung ist das Halsband mit einem Sensor ausgestattet, der dazu ausgebildet ist, Messwerte aufzuzeichnen und bei Funkkontakt mit dem Basisgerät auszutauschen. Beispielsweise kann ein aktueller Ladezustand einer Batterie des Halsbands gemessen und an das Basisgerät übertragen werden, um rechtzeitig eine Benachrichtigung eines Benutzers auszulösen, bevor der Ladezustand einen kritischen Wert erreicht.

In einer Ausgestaltung weist das Basisgerät und/oder das Halsband einen Transceiver-Chip und eine damit verbundene Antenne auf, wobei die Ausführung der Antenne von einer Vorgabe eines Transceiver-Chip-Herstellers derart abweicht, dass sich die Reichweite der Funkverbindung zwischen Basisgerät und Halsband relativ zur Reichweite der Funkverbindung bei Verwendung einer der Vorgabe entsprechenden Antenne um 30% oder mehr verringert. Bei dieser Ausgestaltung wird für das Basisgerät oder für das Halsband oder für beide ein handelsüblicher Transceiver-Chip eingesetzt. Derartige Transceiver-Chips sind weit verbreitet und finden sich beispielsweise in Funkschlüsseln für Kraftwerkzeuge oder sogenannten "keyless entry"-Systemen. Der jeweilige Hersteller dieser handelsüblichen Chips veröffentlicht umfangreiche Datenblätter, die Vorgaben auch darüber enthalten, wie eine geeignete Antenne auszusehen hat. Werden diese Vorgaben für die Antenne eingehalten, ergibt sich eine bestimmte Reichweite der Funkverbindung. In der Ausgestaltung der Erfindung ist vorgesehen, bei der Ausführung der Antenne gezielt von einer solchen Vorgabe abzuweichen und dadurch die Reichweite der Funkverbindung "künstlich" zu verringern. Beispielsweise kann die Vorgabe eine Längenangabe oder ein Strahlungswiderstand einer Antenne sein. Die Reichweite der Funkverbindung kann grundsätzlich auch auf andere Weise beeinflusst werden, insbesondere durch Anpassen der Sendeleistung, was bei handelsüblichen Transceiver-Chips ebenfalls vorgesehen ist. Versuche haben jedoch ergeben, dass selbst bei der geringsten Sendeleistung typischer Transceiver-Chips immer noch eine relativ große Reichweite gegeben ist. Im Zusammenhang mit der Erfindung führt dies dazu, dass sich der Transceiver-Chip am Halsband häufiger innerhalb der Reichweite befindet, als für die erwünschte Steuerung der Katzenklappe erforderlich. Dadurch kommt es häufiger als erwünscht zum Aufbau einer Funkverbindung, was die Lebensdauer einer Batterie des Halsbands verringert. Durch die Verkleinerung der Reichweite der Funkverbindung kann auf einfache Weise verhindert werden, dass sich das Halsband innerhalb der Reichweite befindet, obwohl sich die Katze noch weit außerhalb des definierten Bereichs um die Katzenklappe herum aufhält.

In einer Ausgestaltung ist die Antenne eine Linearantenne, deren Länge 20% oder weniger von einer Wellenlänge einer eingesetzten Sendefrequenz beträgt. Auch bei dieser Maßnahme handelt es sich um eine einfache und effektive Verringerung der Reichweite. Insbesondere ist die so bemessene Linearantenne kürzer als eine für einen hohen Wirkungsgrad günstige Lambda-Viertel-Antenne. Wird beispielsweise eine Frequenz im Bereich von 400 MHz bis 500 MHz verwendet, insbesondere im Bereich von 433 MHz, beträgt die Länge einer Lambda-Viertel-Antenne ungefähr 17 cm. Es kann dann zum Beispiel mit einer Antenne mit einer Länge von 13 cm oder weniger gearbeitet werden, um die Reichweite wirksam zu reduzieren. Auch die Verwendung einer Antenne mit nur wenigen Zentimetern Länge, beispielsweise im Bereich von 1 cm bis 5 cm, ist möglich. In vielen Fällen ermöglicht die Verkürzung der Antenne eine wesentliche Senkung der Fertigungskosten, insbesondere wenn die Antenne in Form einer Leiterbahn als Teil einer Platine ausgeführt werden kann.

Bei der Erfindung gemäß Anspruch 1 ist das Basisgerät dazu ausgebildet, die Verriegelungseinheit erst dann in eine nicht-verriegelte Stellung zu bringen, wenn eine Sensoreinrichtung einen mechanischen Öffnungsversuch erfasst. Mit dem Öffnungsversuch geht eine Auslenkung der Klappe relativ zu einem feststehenden Rahmen der Katzenklappe aus einer Ruhelage einher. Eine solche Auslenkung kann von einer Katze bewirkt werden, die bei dem Versuch, durch die Klappe hindurchzugehen oder diese aufzustoßen, die Klappe berührt. Voraussetzung für das Entriegeln ist, dass zuvor die Katze als berechtigt identifiziert wurde. Bei der Erfindung kann diese Identifizierung, auch zu bezeichnen als Prä-Autorisierung, bereits erfolgen, bevor die Katze die Katzenklappe erreicht hat, nämlich noch während Sie sich in dem definierten Bereich um die Katzenklappe herum aufhält. Wie bereits erläutert dauert dieser Identifizierungsvorgang eine gewisse Zeit und kann ohne erhöhten Energieverbrauch nicht wesentlich verkürzt werden. Es ist daher nicht zielführend, mit der Identifizierung erst bei Erfassung eines Öffnungsversuchs zu beginnen. Ist aber die Identifizierung zu diesem Zeitpunkt bereits abgeschlossen, kann die Entriegelung bei Erfassen des Öffnungsversuchs noch rechtzeitig erfolgen. Ein besonderer Vorteil kann darin bestehen, dass ein beim Entriegeln entstehendes Geräusch von der Katze als Folge des Öffnungsversuchs wahrgenommen und daher als weniger bedrohlich empfunden wird, als ein zu einem zufälligen Zeitpunkt schon vor dem Öffnungsversuch erklingendes Geräusch. Bei schreckhaften Katzen kann dies dafür ausschlaggebend sein, ob die Katze die Zugangsmöglichkeit akzeptiert.

Bei der Erfindung gemäß Anspruch 1 ist die Sensoreinrichtung dazu ausgebildet, zwischen einem mechanischen Öffnungsversuch von einer Innenseite der Klappe und einem mechanischen Öffnungsversuch von einer Außenseite der Klappe zu unterscheiden.

Hierzu kann die Sensoreinrichtung beispielsweise zwei Sensoren aufweisen, von denen jeweils einer bei Auslenkung der Klappe in eine der beiden Richtungen aktiviert oder deaktiviert wird. Ebenfalls möglich ist eine asymmetrische Anordnung zweier Sensoren, so dass aus der zeitlichen Abfolge der Aktivierung der Sensoren auf die Richtung der Auslenkung geschlossen werden kann. Insbesondere kann die Sensoreinrichtung mindestens einen an der Klappe angeordneten Permanentmagneten und zwei fest am Rahmen angeordnete Reed-Kontakte aufweisen. Es ist aus zwei Gründen von Vorteil, die Richtung eines Öffnungsversuchs zu erkennen. Zum einen kann der Ausgang der Katze beschränkt werden, insbesondere wenn die Katze ab einer bestimmten Uhrzeit das Haus nicht mehr verlassen soll, wobei ein Zugang in das Haus jederzeit ermöglicht werden kann. Zum anderen können Zugang und Ausgang der Katze protokolliert werden, so dass zu jedem Zeitpunkt eine Information über den vermutlichen Aufenthaltsort der Katze, also innerhalb oder außerhalb des Hauses, vorliegt.

Nachfolgend wird die Erfindung anhand eines in zwei Figuren dargestellten Ausführungsbeispiels näher erläutert. Es zeigen:
- Fig. 1: eine schematische Übersichtsdarstellung einer erfindungsgemäßen Vorrichtung, und
- Fig. 2: eine schematische Darstellung zum inneren Aufbau des Basisgeräts bzw. des Halsbands aus Fig. 1,
- Fig. 3: eine schematische Darstellung zum Aufbau der Verriegelungseinheit in einer Ansicht von oben,
- Fig. 4: eine schematische Darstellung der Verriegelungseinrichtung in einer Ansicht von vorn.

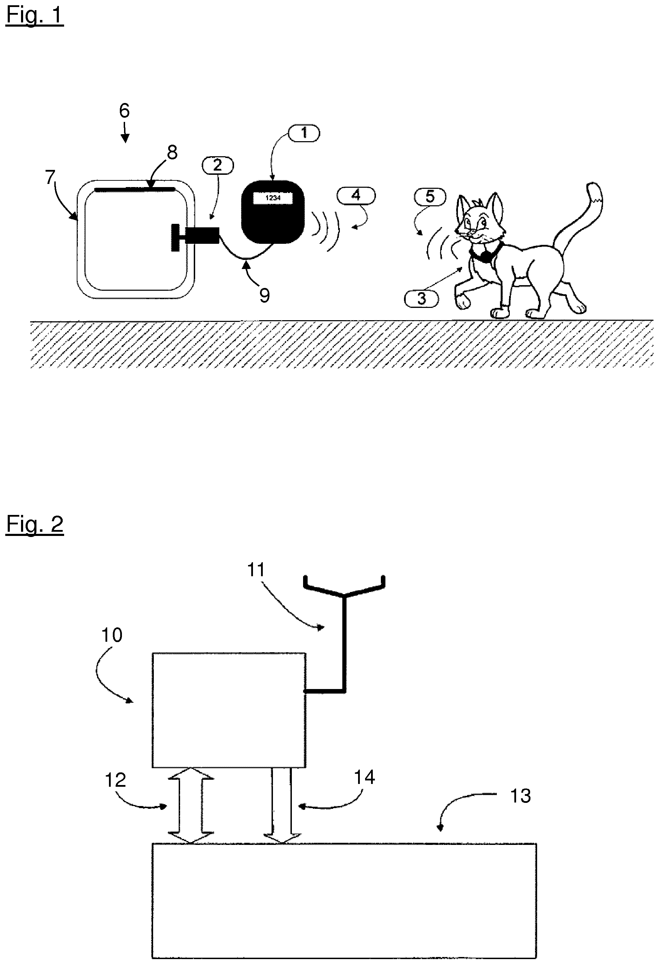

Die in der Fig. 1 ganz links gezeigte Katzenklappe 6 weist einen beispielsweise in eine Tür eingebauten Rahmen 7 und eine schwenkbar daran angelenkte Klappe 8 auf. Die an dem Rahmen 7 befestigte Verriegelungseinrichtung 2 wird elektromechanisch betätigt und kann die Klappe 8 in einer geschlossenen Stellung verriegeln. Mit der Verriegelungseinrichtung 2 über eine elektrische Leitung 9 verbunden ist ein Basisgerät 1, in dem eine Funk-Schnittstelle untergebracht ist. Außerdem umfasst das dargestellte Basisgerät 1 eine in der Figur 1 erkennbare Anzeige sowie eine nicht dargestellte Stromversorgung.

An der in Fig. 1 rechts gezeigten Katze ist ein Halsband 3 befestigt, das einen Funk-Transmitter aufweist. Wie durch die bei 4 und 5 symbolisierten Funkwellen dargestellt, setzt die Vorrichtung eine aktive Funktechnologie ein.

Fig. 2 zeigt den internen Aufbau sowohl des Basisgeräts 1 als auch des Halsbands 3. In beiden gibt es jeweils einen RF-Anteil 10, der eine Sende- und Empfangseinheit aufweist und mit einer Antenne 11 verbunden ist. Über eine Datenschnittstelle 12, im Beispiel ein SPI-Bus, ist der RF-Anteil 10 mit einem Prozessor 13 verbunden. Wie durch den Pfeil 14 symbolisiert, stellt der RF-Anteil 10 einen Messwert über eine aktuelle Empfangs-Feldstärke zur Verfügung und übermittelt diese an den Prozessor 13.

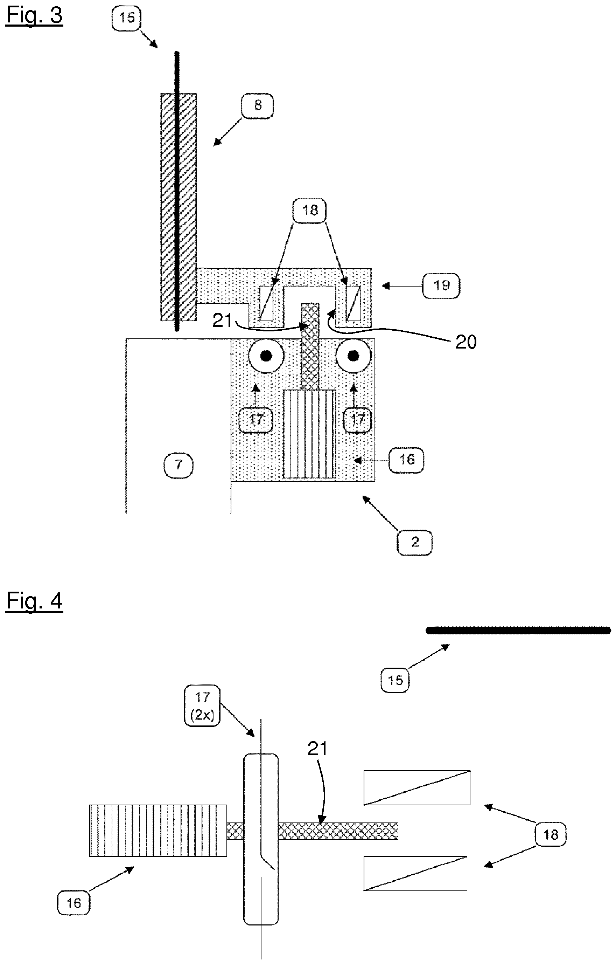

Fig. 3 zeigt schematisch eine Ansicht eines Ausschnitts der Katzenklappe von oben. Die Schwenkachse 15, an der die Klappe 8 angelenkt ist, verläuft in horizontaler Richtung. Die Klappe 8 ist innerhalb des Rahmens 7 angeordnet, von dem in der Fig. 3 nur eine Seite dargestellt ist. An dem Rahmen 7 ist eine Verriegelungseinheit 2 befestigt, die einen Elektromagneten 16 zum Antrieb eines Verriegelungsstifts 21 aufweist. In die Verriegelungseinheit 2 sind zwei Reed-Kontakte 17 integriert, die zusammen mit zwei jeweils einem der Reed-Kontakte 17 gegenüberliegenden, mit einem Befestigungsstück 19 an der Klappe 8 befestigten Permanentmagneten 18 eine Sensoreinrichtung bilden.

In der gezeigten Ruhestellung der Klappe 8 greift der Verriegelungsstift 21 in eine an der Klappe 8 angeordnete Öffnung 20 ein und hält die Klappe 8 so in der gezeigten, verriegelten Geschlossenstellung. In dieser Stellung sind beide Reed-Kontakte 17 aktiviert, so dass die Geschlossenstellung zuverlässig detektiert und ein Verstellen des Verriegelungsstifts 21 in die verriegelte Stellung bei geöffneter Klappe 8 einfach verhindert werden kann.

Fig. 4 zeigt Teile der Anordnung aus Fig. 3 in einer Ansicht von vorn. Oben ist die Lage der Schwenkachse 15 angedeutet. In dieser Ansicht sind die beiden Reed-Kontakte 17 hintereinander angeordnet. Man erkennt, dass die beiden den Reed-Kontakten 17 gegenüberliegenden Permanentmagneten 18 auf unterschiedlicher Höhe angeordnet sind, d.h. in unterschiedlichem Abstand von der Schwenkachse 15. Dadurch sprechen die beiden Reed-Kontakte 17 auf Auslenkungen der Klappe 8 in die beiden möglichen, entgegengesetzten Richtungen "nach innen" und "nach außen" bei unterschiedlichen Auslenkungen der Klappe 8 an. Dies ermöglicht es der Sensoreinrichtung, zwischen einem mechanischen Öffnungsversuch von der Außenseite und von der Innenseite zu unterscheiden.

Nachfolgend wird die Erfindung nochmals in anderen Worten und unter Bezugnahme auf weitere Ausführungsbeispiele erläutert.

Katzen, die in Haushalten gehalten werden, sollten für eine artgerechte Haltung Freigang nach draußen erhalten. Dies kann entweder geschehen, indem der Besitzer die Katze regelmäßig manuell (z. B. durch die Haustür) rein-/rausgehen lässt (was einen erheblichen Aufwand für den Besitzer bedeutet und die Möglichkeiten der Katze zur freien Bewegung erheblich einschränkt), oder mittels eines Durchgangs (durch Mauerwerk, Türen oder Fenster) mit Hilfe einer Katzenklappe.

Katzenklappen sind in der Regel einfache mechanische Klappen, die jedes Tier (nicht nur die eigene Katze, sondern auch fremde Katzen oder gar Schädlinge wie Ratten) passieren lassen und sich höchstens manuell verriegeln lassen (dies teilweise nur als beweglich/fixiert oder feiner abgestuft mit der Möglichkeit, die Katze beidseitig, nur hinein, nur hinaus zu lassen oder gesperrt zu sein = 4 Stellungen).

Daneben gibt es elektronische Katzenklappen, die den Zugang elektromechanisch verriegeln und die Katze mehr oder minder eindeutig identifizieren und die Passage dann freigeben. Dies kann geschehen über:
- Magnet: am Halsband befestigt
- RFID: entweder als Halsband oder als vom Tierarzt implantierter Chip
- Funk: am Halsband befestigt

Die Variante des Magneten scheidet in der Regel aus, da keine differenzierte Identifizierung möglich ist (lediglich Magnet vorhanden oder nicht).

Die RFID-Variante ist die aktuell am häufigsten eingesetzte Variante, da der verwendete RFID-Tag preisgünstig ist und keine eigene Energiequelle benötigt. Diese Technologie hat jedoch den entscheidenden Nachteil, dass die Reichweite eines RFID-Tags auf wenige Zentimeter begrenzt ist. Für eine sichere Erkennung des Tags ist es erforderlich, dass die Katze sich in einen engen, definierten Bereich um die Antenne begibt, was in vielen Fällen nicht sichergestellt werden kann. Beispielsweise gibt es Katzen, die versuchen, die Klappe zunächst mit dem lang ausgestreckten Vorderlauf zu öffnen und somit der Abstand Antenne - RFID-Tag zu groß ist. Die Reichweite ließe sich durch eine größere Antenne auf Seiten der Klappe erweitern, jedoch wird diese kommerziell nicht erfolgreich sein, da der Kunde eine derartig große Antenne nicht akzeptieren wird ("Wohnzimmer Tauglichkeit").

Dies führt dazu, dass auch "berechtigte" Katzen die Klappe nicht passieren können. In der Regel bemerkt der Besitzer dies noch nicht einmal sofort, sondern die Katze bleibt ausgesperrt und verliert im schlimmsten Fall das Vertrauen in das eigene Zuhause und entfernt sich dauerhaft. Der RFID Ansatz bietet somit keine Lösung, die in jedem Falle eine sichere Funktion gewährleistet.

Eine für diesen Anwendungsfall geeignete Methode der Identifizierung der Katze muss folgende Anforderungen erfüllen:
- Reproduzierbare, sichere Erkennung: die Erkennung einer Katze muss unter allen Umständen sicher funktionieren, ein nur teilweise Erkennung ist nicht akzeptabel und wird vom Kunden nicht toleriert.
- Die Identifizierung muss eindeutig sein: Jedes einzelne Tier muss eindeutig erkannt und von anderen Tieren abgrenzbar sein
- Abstandsbestimmung: Es muss sichergestellt sein, dass nur Signale von Katzen akzeptiert werden, die sich in einem definierten Bereich um die Katzenklappe aufhalten. Eine Katze, die sich in mehreren Metern Entfernung z. B. auf dem Sofa aufhält, während ein fremdes Tier Einlass begehrt, darf nicht akzeptiert werden.
- Langfristige Funktionalität: Um eine Akzeptanz durch den Kunden zu erreichen, muss das Gesamtsystem über einen langen Zeitraum (> 1 Jahr) funktionieren, ohne dass manuelle Eingriffe (wie z. B. Batteriewechsel) nötig sind. Sofern eine eigene Energieversorgung nötig ist, muss das System so ausgelegt sein, dass eine entsprechend lange Lebensdauer garantiert ist.

Der in den nachfolgenden Beispielen angegebenen Erfindung liegt zugrunde, dass auf dem Markt keine Lösung verfügbar ist, die alle Anforderung gleichzeitig erfüllt.

Dieses Problem wird mit den in den Beispielen aufgeführten Merkmalen gelöst.

Ein Beispiel ist in Fig. 1 dargestellt. Es zeigt:
- Das Basisgerät (1) der Katzenklappe, in dem die Anzeige und Bedieneinheit, die Stromversorgung und die Funk-Schnittstelle untergebracht ist.
- Eine Verriegelungseinheit (2), die die Klappe elektromechanisch verriegelt.
- Nähert sich eine Katze der Klappe, wird der Funk-Transmitter (3), der sich am Halsband der Katze befindet, vom Basisgerät angefunkt (4).
- Das Funk-Telegramm wird dann vom Transmitter (3) empfangen, ausgewertet und eine entsprechende Antwort per Funk zurück übermittelt (5).

Der grundlegende Aufbau im Inneren des Basisgerätes bzw. des Halsbandes ist in Fig. 2 dargestellt.

Es zeigt:
- Den RF-Anteil (10), der die Baugruppen zum Empfang und zum Senden von Daten enthält und über eine geeignete Antenne (11) verfügt.
- Der RF-Anteil wird über einen Prozessor (13) kontrolliert.
- Die Kommunikation zwischen RF-Anteil und Prozessor geschieht über eine (i. d. R. digitale) Daten-Schnittstelle (z. B. einen SPI-Bus) (12)
- Zusätzlich stellt der RF-Anteil einen Messwert zur Verfügung, der die aktuelle Empfangs-Feldstärke übermittelt. Dieser Messwert kann über eine analoge Schnittstelle übertragen werden, oder auch in die Daten-Schnittstelle (12) integriert sein.

Die eingesetzte Funktechnologie kann dabei z. B. im ISM-Band liegen und ist somit lizenz- und kostenfrei durch einen Endanwender nutzbar.

Die eindeutige Erkennung einer Katze ist gewährleistet, indem z. B. bei der Herstellung ein eindeutiger Identifier (z. B. eine Seriennummer) eingebracht wird, der bei der Kommunikation über Funk übertragen wird.

Die Abstandmessung bedarf in der Regel einer Kalibrierung, da durch Fertigungstoleranzen derart unterschiedliche Messergebnisse auf die benötigten kurzen Entfernungen zu erwarten sind, die eine unkalibrierte Auswertung unmöglich machen. Da in jedem Fall die Notwendigkeit gegeben ist, das Halsband bei einer Basisstation "anzumelden", damit der eindeutige Identifier in der Basisstation als bekannt gespeichert werden kann, kann im Rahmen dieses Vorgangs das Halsband in einer oder mehreren definierten Entfernungen zum Basisgerät platziert werden, dabei Funktelegramme ausgetauscht werden und die so gewonnen Ergebnisse zur Kalibrierung genutzt werden.

Der Energieverbrauch des mobilen Anteils kann minimiert werden, um eine maximale Lebensdauer zu erzielen indem während der inaktiven Phasen des Gerätes (= keine aktive Kommunikation mit dem Basisgerät):
- der Prozessor in einen Zustand versetzt wird, indem alle Funktionen, soweit möglich, deaktiviert sind,
- der RF-Anteil ebenfalls in einen "Sleep-Mode" versetzt wird, in dem der Transmitter in jedem Fall dauerhaft deaktiviert ist und der Receiver nur zyklisch für kurze Zeit aktiviert wird,
- das Basisgerät zunächst ein "Magic Packet" periodisch in schneller Folge sendet, dass dazu führt, das der RF-Anteil in einem aktiven Timeslot des Receivers dieses Paket empfängt und (sofern dies dem Receiver möglich ist) auf seine Gültigkeit prüft. Das Basisgerät muss diese Pakete mindestens für einen Zeitraum senden, der geringfügig länger als die Periodendauer der Timeslots des Receivers ist.
- Ist ein solches Paket vom Receiver empfangen worden, aktiviert dieser den Prozessor, z. B. durch Auslösen eines Interrupts.
- Der in vollen Betriebszustand gewechselte Prozessor versetzt dann seinerseits den RF-Anteil in einen Zustand dauerhafter Empfangsbereitschaft, empfängt so das eigentliche Datenpaket (das das Basisgerät nach der Folge der Magic Packets ausgesendet hat), verarbeitet und beantwortet dieses per Funk zurück an das Basisgerät.
- Im Anschluss versetzt der Prozessor zunächst den Receiver wieder in den oben erwähnten Sleep-Mode und wechselt dann selber in einen minimalen Energiezustand über.
- Für den Fall, dass keine gültigen Nutzdaten nach dem Magic Packet empfangen werden, wechselt das System nach Erreichen eines Time-Outs selbstständig wieder in den Energiesparmodus.

Der Energiehaushalt des mobilen Anteils kann dadurch verbessert werden, dass der mobile Anteil z. B. aus der Bewegung der Katze Energie erzeugt. Die so gewonnenen Energiemengen sind zwar äußerst gering, jedoch bezogen auf den ebenfalls geringen Energiebedarf ausreichend.

Auf diese Art und Weise ist es möglich, unter Verwendung einer Batterie mit hoher Energiedichte eine Lebensdauer im Bereich von mehreren Jahren zu erreichen. Setzt man dies im Bezug zur Wahrscheinlichkeit, dass die Katze das Halsband in einem Zeitraum von 1 Jahr verliert, ist kein Eingriff des Anwenders mehr notwendig. Die Wahrscheinlichkeit des Verlierens eines Halsbandes in diesem Zeitraum ist dadurch gegeben, dass Halsbänder für Katzen über einen sogenannten Sicherheitsverschluss verfügen, der bei einer Zugkraft, die kleiner als das Körpergewicht der Katze ist, öffnet. Dadurch wird verhindert, dass die Katze sich zum Beispiel beim Klettern in Bäumen beim "Hängenbleiben" an Asten selber erdrosselt.
Beispiel 1: Reproduzierbare und sichere Erkennung einer Katze, dadurch gekennzeichnet, dass eine bidirektionale, aktive Funktechnologie (vorzugsweise aber nicht ausschließlich im ISM-Band) eingesetzt wird, die über eine ausreichende Reichweite mindestens im Bereich einiger Meter verfügt, so dass ein Versagen der Erkennung durch mangelnde Reichweite ausgeschlossen ist.
Beispiel 2: Abstandsbestimmung Katzenklappe zu Katze dadurch gekennzeichnet, dass während der bidirektionalen Kommunikation die aktuelle Empfangsfeldstärke mit hinreichender Genauigkeit gemessen wird und mit zuvor hinterlegten Referenzwerten verglichen wird. Die Messung der Feldstärke kann dabei sowohl nur bei einem der beiden Kommunikationspartner als auch bei beiden geschehen. Geschieht die Messung mindestens im mobilen Anteil (= Halsband), wird der Messwert an das Basisgerät im Antworttelegram zusammen mit weiteren Daten (wie z. B. dem eindeutigen Identifier) übermittelt.
Beispiel 3: Ausreichende Lebensdauer des mobilen Anteils (= Halsband) durch geringen Energiebedarf dadurch gekennzeichnet, dass der mobile Anteil während der inaktiven Phasen in einem Zustand minimalen Energieverbrauches versetzt wird, durch den er erst durch den Empfang eines Datenpaketes des Basisgerätes in einen höheren Betriebszustand überführt wird und nach Beendigung der Kommunikation wieder in den Zustand minimalen Verbrauches zurück wechselt.
Beispiel 4: Ausreichende Lebensdauer des mobilen Anteils (= Halsband) durch eigene Energiegewinnung dadurch gekennzeichnet, dass der mobile Anteil über eine geeignete Vorrichtung verfügt, um selbstständig Energie zu erzeugen. Dies kann z. B. dadurch erreicht werden, dass ein Massestück sich begrenzt frei bewegen kann und durch Ausnutzen von Piezoeffekten oder Induktion Energie aus der Bewegung der Katze, die auf den mobilen Anteil übertragen wird, gewinnt.
Beispiel 5: Update-Fähigkeit des mobilen Anteils (= Halsband) dadurch gekennzeichnet, dass der mobile Anteil in der Lage ist, seinen eigenen Programmspeicher während der Laufzeit zu überschreiben und eine neue Firmware zu installieren, die in Paketen per Funk von der Basisstation übermittelt wird.
Beispiel 6: Übermittlung von weiteren Messdaten der Katze an den mobilen Anteil (= das Halsband) dadurch gekennzeichnet, dass das Halsband mit geeigneten Sensoren ausgestattet werden kann, die Messwerte aufzeichnen und diese bei Funkkontakt mit dem Basisgerät mit diesem austauschen. Dadurch kann z. B. der aktuelle Ladezustand der Batterie an das Basisgerät übertragen werden, um rechtzeitig eine Alarmierung des Anwenders auszulösen, bevor der Ladezustand einen kritischen Wert erreicht.

## Patentansprüche

1. Vorrichtung zur Identifizierung einer Katze zum Zwecke der Ansteuerung einer elektronischen Katzenklappe (6) mit
• einer Katzenklappe (6), die ein Basisgerät (1) mit einer Funk-Schnittstelle aufweist, und
• einem Halsband (3) für eine Katze, an dem eine Funkeinheit angeordnet ist, wobei
• die Funk-Schnittstelle und die Funkeinheit eine bidirektionale, aktive Funktechnologie einsetzen und
• das Basisgerät (1) und/oder das Halsband (3) dazu ausgebildet ist, eine Abstandsbestimmung zwischen Katze und Katzenklappe (6) vorzunehmen, wobei eine Empfangs-Feldstärke gemessen und mit einem zuvor hinterlegten Referenzwert verglichen wird, sodass nur Signale von Katzen akzeptiert werden, die sich in einem definierten Bereich um die Katzenklappe (6) herum aufhalten, **dadurch gekennzeichnet, dass**
• die Katzenklappe eine Verriegelungseinheit (2) zur elektromechanischen Verriegelung der Katzenklappe aufweist und
• das Basisgerät dazu ausgebildet ist, die Verriegelungseinheit (2) erst dann in eine nicht-verriegelte Stellung zu bringen, wenn eine Sensoreinrichtung einen mechanischen Öffnungsversuch erfasst, wobei die Sensoreinrichtung dazu ausgebildet ist, zwischen einem mechanischen Öffnungsversuch von einer Innenseite der Klappe und einem mechanischen Öffnungsversuch von einer Außenseite der Klappe zu unterscheiden.

2. Vorrichtung nach Anspruch 1, **dadurch gekennzeichnet, dass** die Funkeinheit dazu ausgebildet ist, ein von der Funk-Schnittstelle ausgesendetes Funk-Telegramm zu empfangen und per Funk ein Antwort-Telegramm mit einem Messwert für die Empfangs-Feldstärke an das Basisgerät (1) zu übermitteln.

3. Vorrichtung nach Anspruch 2, **dadurch gekennzeichnet, dass** die Funkeinheit dazu ausgebildet ist, in dem Antwort-Telegramm den Messwert zusammen mit einem eindeutigen Identifier zu übermitteln.

4. Vorrichtung nach einem der Ansprüche 1 bis 3, **dadurch gekennzeichnet, dass** das Basisgerät (1) und/oder das Halsband (3) einen RF-Anteil (10) aufweist, der Baugruppen zum Empfangen und Senden von Daten enthält und über eine Antenne (11) verfügt.

5. Vorrichtung nach Anspruch 4, **dadurch gekennzeichnet, dass** das Basisgerät (1) und/oder das Halsband (3) einen Prozessor (13) aufweist, der dazu ausgebildet ist, den RF-Anteil (10) zu steuern.

6. Vorrichtung nach Anspruch 5, **dadurch gekennzeichnet, dass** der Prozessor (13) des Halsbands (3) dazu ausgebildet ist, in einen Zustand mit minimalem Energieverbrauch versetzt zu werden, wenn keine aktive Kommunikation mit dem Basisgerät (1) erfolgt.

7. Vorrichtung nach einem der Ansprüche 4 bis 6, **dadurch gekennzeichnet, dass** der RF-Anteil (10) in einen Schlafmodus versetzbar ist, in dem die Funkeinheit deaktiviert und ein Funk-Receiver nur periodisch mit einer Periodendauer für kurze Zeitspannen aktiviert ist.

8. Vorrichtung nach Anspruch 7, **dadurch gekennzeichnet, dass** das Basisgerät (1) dazu ausgebildet ist, periodisch für einen Zeitraum Magic Packets zu senden, wobei der Zeitraum länger ist als die Periodendauer und wobei der Funk-Receiver dazu ausgebildet ist, den Prozessor (13) des Halsbands (3) bei Empfang eines Magic Packets zu aktivieren.

9. Vorrichtung nach einem der Ansprüche 4 bis 8, dadurch gekennzeichet, dass der RF-Anteil (10) dazu ausgebildet ist, einen Messwert für die Empfangs-Feldstärke zur Verfügung zu stellen.

10. Vorrichtung nach Anspruch 9, **dadurch gekennzeichnet, dass** die Funkeinheit so ausgebildet ist, dass der RF-Anteil (10) nur dann ein Antworttelegramm auf ein empfangenes Signal sendet, wenn ein Messwert für die Empfangs-Feldstärke des empfangenen Signals den Referenzwert erreicht oder überschreitet.

11. Vorrichtung nach einem der Ansprüche 1 bis 10, **dadurch gekennzeichnet, dass** das Halsband (3) mit einem Sensor ausgestattet ist, der dazu ausgebildet ist, Messwerte aufzuzeichnen und bei Funkkontakt mit dem Basisgerät (1) auszutauschen.

12. Vorrichtung nach einem der Ansprüche 1 bis 11, **dadurch gekennzeichnet, dass** die Antenne eine Linearantenne ist, deren Länge 20 % oder weniger von einer Wellenlänge einer eingesetzten Sendefrequenz beträgt.

## Claims

1. A device for identifying a cat for the purpose of controlling an electronic cat door (6), comprising:
• a cat door (6) having a base unit (1) with a radio interface, and
• a collar (3) for a cat on which a radio unit is arranged, wherein
• the radio interface and the radio unit use a bidirectional active radio technology, and
• the base unit (1) and/or the collar (3) is designed to determine a distance between the cat and cat door (6), wherein a reception field strength is measured and compared with a previously saved reference value so that only signals are accepted from cats that are within a specific range around the cat door (6), **characterized in that**
• the cat door has a locking unit (2) for electromechanically locking the cat door, and
• the base unit is designed to only move the locking unit (2) into an unlocked position when a sensor apparatus detects a mechanical opening attempt, wherein the sensor apparatus is designed to differentiate between a mechanical opening attempt from inside the door and a mechanical opening attempt from outside the door.

2. The device according to claim 1, **characterized in that** the radio device is designed to receive a radio message sent by the radio interface and to transmit by radio a response message with a measured value for the reception field strength to the base unit (1).

3. The device according to claim 2, **characterized in that** the radio unit is designed to transmit the measured value together with a unique identifier within the response message.

4. The device according to one of claims 1 to 3, **characterized in that** the base unit (1) and/or the collar (3) has an RF part (10) that contains modules for receiving and transmitting data and has an antenna (11).

5. The device according to claim 4, **characterized in that** the base unit (1) and/or the collar (3) has a processor (13) that is designed to control the RF part (10).

6. The device according to claim 5, **characterized in that** the processor (13) of the collar (3) is designed to be switched to a state with minimum energy consumption when there is no active communication with the base unit (1).

7. The device according to one of claims 4 to 6, **characterized in that** the RF part (10) can be switched to a sleep mode in which the radio unit is deactivated, and a radio receiver is only periodically activated over a duration for short time spans.

8. The device according to claim 7, **characterized in that** the base unit (1) is designed to periodically send magic packets for a period, wherein the period is longer than the duration, and wherein the radio receiver is designed to activate the processor (13) of the collar (3) upon receiving a magic packet.

9. The device according to one of claims 4 to 8, **characterized in that** the RF part (10) is designed to provide a measured value for the reception field strength.

10. The device according to claim 9, **characterized in that** the radio unit is designed so that the RF part (10) only sends a response message to a received signal when a measured value for the reception field strength of the received signal reaches or exceeds the reference value.

11. The device according to one of claims 1 to 10, **characterized in that** the collar (3) is equipped with a sensor that is designed to record measured values and exchange them with the base unit (1) during radio contact.

12. The device according to one of claims 1 to 11, **characterized in that** the antenna is a linear antenna with a length that is 20% or less than a wave of a used transmission frequency.

## Revendications

1. Dispositif d'identification d'un chat à des fins de commande d'une chatière (6) électronique, avec
• une chatière (6) qui présente un appareil de base (1) avec interface radio, et
• un collier (3) pour un chat sur lequel est disposée une unité radio,
• l'interface radio et l'unité radio utilisant une technologie radio bidirectionnelle active et
• l'appareil de base (1) et/ou le collier (3) étant constitué pour procéder à une détermination de distance entre le chat et la chatière (6), une intensité de champ de réception étant mesurée et comparée à une valeur de référence enregistrée au préalable de telle sorte que ne sont acceptés que des signaux de chats qui sont présents dans une zone définie autour de la chatière (6), **caractérisé en ce que**
• la chatière présente une unité de verrouillage (2) destinée au verrouillage électromécanique de la chatière et
• l'appareil de base est constitué pour n'amener l'unité de verrouillage (2) dans une position non verrouillée que si un dispositif de capteur détecte une tentative d'ouverture mécanique, le dispositif de capteur étant constitué pour effectuer une distinction entre une tentative d'ouverture mécanique à partir d'un côté intérieur de la chatière et une tentative d'ouverture mécanique à partir d'un côté extérieur de la chatière.

2. Dispositif selon la revendication 1, **caractérisé en ce que** l'unité radio est constituée pour recevoir un radiogramme émis par l'interface radio et pour transmettre par radio à l'appareil de base (1) un télégramme-réponse avec une valeur de mesure pour l'intensité de champ de réception.

3. Dispositif selon la revendication 2, **caractérisé en ce que** l'unité radio est constituée pour transmettre dans le télégramme-réponse la valeur de mesure conjointement avec un identifiant non ambigu.

4. Dispositif selon l'une des revendications 1 à 3, **caractérisé en ce que** l'appareil de base (1) et/ou le collier (3) présente une fraction RF (10) qui comprend des modules pour la réception et l'émission de données et qui dispose d'une antenne (11).

5. Dispositif selon la revendication 4, **caractérisé en ce que** l'appareil de base (1) et/ou le collier (3) présente un processeur (13) qui est constitué pour commander la fraction RF (10).

6. Dispositif selon la revendication 5, **caractérisé en ce que** le processeur (13) du collier (3) est constitué pour être amené dans un état avec consommation d'énergie minimale en cas d'absence de communication active avec l'appareil de base (1).

7. Dispositif selon l'une des revendications 4 à 6, **caractérisé en ce que** la fraction RF (10) peut être amenée dans un mode veille dans lequel l'unité radio est désactivée et un récepteur radio n'est activé que de façon périodique avec une durée de période pendant des laps de temps courts.

8. Dispositif selon la revendication 7, **caractérisé en ce que** l'appareil de base (1) est constitué pour envoyer périodiquement des Magic Packets pendant une période de temps, la période de temps étant plus longue que la durée de période, et le récepteur radio étant constitué pour activer le processeur (13) du collier (3) lors de la réception d'un Magic Packet.

9. Dispositif selon l'une des revendications 4 à 8, **caractérisé en ce que** la fraction RF (10) est constituée pour mettre à disposition une valeur de mesure pour l'intensité de champ de réception.

10. Dispositif selon la revendication 9, **caractérisé en ce que** l'unité radio est constituée de telle sorte que la fraction RF (10) n'envoie un télégramme-réponse à un signal reçu que si une valeur de mesure pour l'intensité de champ de réception du signal reçu atteint ou dépasse la valeur de référence.

11. Dispositif selon l'une des revendications 1 à 10, **caractérisé en ce que** le collier (3) est équipé d'un capteur qui est constitué pour enregistrer des valeurs de mesure et les échanger en cas de contact radio avec l'appareil de base (1).

12. Dispositif selon l'une des revendications 1 à 11, **caractérisé en ce que** l'antenne est une antenne linéaire dont la longueur représente 20 % ou moins d'une longueur d'onde d'une fréquence d'émission utilisée.
